# EUROPÄISCHE PATENTANMELDUNG

(11) **EP 1 110 708 A2**
(43) Veröffentlichungstag der Anmeldung: **27.06.2001**
(21) Anmeldenummer: 00124960.6
(22) Anmeldetag: 16.11.2000
(51) Int. Cl.: B30B 15/06, B32B 31/20

(54) **Verfahren und Vorrichtung zur Herstellung laminierter Plastikkarten**

(30) Priorität: 21.12.1999 DE 19962081
(71) Anmelder: Robert Bürkle GmbH, 72250 Freudenstadt (DE)
(72) Erfinder: Stein, Wolfgang, 72250 Freudenstadt (DE); Cerajewski, Jan, 72172 Sulz/Renfrizhausen (DE)
(74) Vertreter: Brommer, Hans Joachim, Dr.-Ing.

(57) **Zusammenfassung**

Die Erfindung betrifft ein Verfahren und eine Presse zur Herstellung laminierter Plastikkarten wie Scheckkarten, Kreditkarten und dergleichen aus mehreren miteinander zu verpressenden Folien. Dabei wird mit zwei relativ zueinander verfahrbaren Pressplatten (2,3) gearbeitet, die im Presspalt die zu verpressenden Folien mit samt ihren Pressblechen unter Zwischenlage zumindest eines Presspolsters (4,5) aufnehmen. Wesentlich ist, daß dieses Presspolster starr oder verschiebbar an der Presse gehalten ist.

## Beschreibung

Die Erfindung betrifft ein Verfahren und eine Presse zur Herstellung laminierter Plastikkarten wie Scheckkarten, Kreditkarten und dergleichen aus mehreren miteinander zu verpressenden Folien, bestehend aus zwei relativ zueinander verfahrbaren Pressplatten, die beheizbar und/oder kühlbar sind und im Presspalt die zu verpressenden Folien aufnehmen, wobei zwischen den Folien und zumindest einer Pressplatte zumindest ein Presspolster und ein Pressblech angeordnet sind.

Soweit vorliegend von Plastikkarten gesprochen wird, werden darunter beliebige laminierte Karten verstanden, bei denen die elektronischen Bauteile wie Datenträger, Magnetstreifen oder Chip entweder in den Außenflächen der Karte angeordnet oder wie bei den sogenannten Kontaktloskarten im Inneren integriert sind. Die Karten bestehen dabei aus mindestens zwei Folien als Deckblätter und mindestens einer Folie als Mittelblatt. Diese Folien werden in einer oder mehreren aufeinanderfolgenden Heißpressen durch Druck- und Wärmeeinwirkung auf die für den Laminiervorgang erforderliche Schmelztemperatur gebracht und anschließend in zumindest einer Kaltpresse heruntergekühlt bis aus dem Laminat die einzelnen Karten herausgestanzt werden können.

Bei der Herstellung derartiger Plastikkarten ist die exakte Steuerung der Prozeßtemperatur während des Pressvorganges von entscheidender Bedeutung. Es muß nicht nur die richtige Schmelztemperatur im Kern der einzelnen Folien erreicht werden, um den Laminiervorgang zu gewährleisten, sondern es muß auch der Temperaturgradient beachtet werden.

Eine zu schnelle Temperaturerhöhung kann Blasen im Kunststoff erzeugen, wogegen es bei einer zu raschen Abkühlung, insbesondere bei einem Abschrecken der heißen Folien an den kalten Pressplatten der Kaltpresse zur Kraterbildung kommen kann.

Aus diesem Grund werden häufig sogenannte Presspolster verwendet, die zwischen dem Folienpaket und den Pressplatten eingelegt werden. Sie verhindern eine lokale Überhitzung in der Heißpresse, wie auch Abschreckung in der Kaltpresse, weil sie für einen gleichmäßigeren Wärmeübergang sorgen. Darüber hinaus werden auch Dickentoleranzen im Pressmaterial und den Pressplatten ausgeglichen.

Eine andere wichtige Forderung besteht darin, daß die Oberfläche der Kunststoffkarte absolut plan, hochglänzend und ohne Fehlstellen ausgebildet sein muß. Dies wird dadurch erreicht, daß die zu laminierenden Folien jeweils zwischen sogenannte Pressbleche gepackt werden. Bei diesen Pressblechen handelt es sich um hochglanzpolierte Edelstahlbleche von etwa 0,5 mm Wandstärke, wobei hier künftig eventuell auch andere Werkstoffe eingesetzt werden können. Diese Pressbleche stellen sicher, daß das Laminat die gewünschte glatte Oberfläche erhält. Wahlweise können auch profilierte Pressbleche eingesetzt werden, wenn die Plastikkarten eine entsprechende Oberflächenstruktur aufweisen sollen.

Um die Produktivität zu steigern, ist es bekannt, sogenannte Mehretagenpressen zu verwenden, in denen eine Vielzahl übereinandergeschichteter Folienstapel gleichzeitig laminiert werden können. Dabei muß allerdings ein gewisser Temperaturabfall zwischen den außen liegenden beheizten Folien und dem Kernbereich in Kauf genommen werden, was nachteilig für die genaue Einhaltung der Prozeßtemperatur ist.

Darüber hinaus verlangen diese Mehretagenpressen eine Vielzahl der vorgenannten Pressbleche, was aufgrund ihrer hochglanzpolierten Ausführung erhebliche Kosten verursacht.

Nicht zuletzt verlangen die Mehretagenpressen eine relativ lange Taktzeit; bis die Laminate aufgeheizt und wieder abgekühlt sind. Es muß mit etwa 45 Minuten gerechnet werden, bis ein fertiges Laminat weiter verarbeitet werden kann.

Daneben ist es durch die DE 44 41 552 auch bekannt, die Laminate einzeln herzustellen, das heißt, daß den Pressen nur soviel Einzelfolien zugeführt werden, wie sie für einen laminierten Einzelbogen notwendig sind. Man kann dadurch mit wesentlich kürzeren Taktzeiten im Sekundenbereich arbeiten und auch den Temperaturverlauf in den Folien genauer steuern. Außerdem ist der apparative Aufwand deutlich geringer als bei einer Mehretagenpresse.

Hiervon ausgehend liegt der vorliegenden Erfindung die Aufgabe zugrunde, das zuletzt beschriebene Kurztaktverfahren für Plastikkartenlaminate weiter zu vervollkommnen, insbesondere den Verfahrensablauf zu vereinfachen und die Taktgeschwindigkeit zu erhöhen.

Diese Aufgabe wird erfindungsgemäß dadurch gelöst, daß die Presspolster nicht mehr wie bisher als lose Zwischenlage auf bzw. unter den Folienstapel gelegt werden, sondern daß sie - starr oder verschiebbar - an der Presse gehalten sind.

Dadurch entfällt das Ausrichten und Auflegen der Presspolster in der Legestation, wo der Folienstapel aufgebaut wird, wie auch das Abnehmen der Presspolster in der Entnahmestation, wo die fertigen Laminate entnommen werden. Der Arbeitsablauf wird dadurch einfacher und kürzer und es entfällt eine Fehlerquelle, weil beim Auflegen der Presspolster das Risiko besteht, die darunter befindlichen Folien zu verschieben. Das Verfahren gestattet somit die Herstellung laminierter Plastikkarten im Kurztaktverfahren im Sekundenbereich.

In Weiterbildung der Erfindung empfiehlt es sich, daß das Presspolster - zumindest das an der oberen Pressplatte angeordnete Presspolster - unter Zugspannung gehalten wird, damit es nicht durchhängt, sondern möglichst großflächig in Anlage an der Pressplatte gehalten wird und somit auch deren Heiz- oder Kühltemperatur annimmt.

Grundsätzlich wäre es zwar auch möglich, das Presspolster mit seiner jeweiligen Pressplatte zu verkleben. Dann wäre aber der Austausch, der hin und wieder notwendig ist, aufwendiger als bei Verwendung einer Spannvorrichtung, die gut zugänglich an der Außenseite, das heißt am Umfang der Pressplatte montiert sein kann.

Zweckmäßig steht das Presspolster an zumindest zwei gegenüberliegenden Rändern seitlich über die Pressplatte vor und ist dort unter Zugspannung fixiert, insbesondere einseitig an eine Spannvorrichtung angeschlossen. Dabei können die vorstehenden Ränder des Presspolsters auch mehr oder weniger nach hinten, also in Gegenrichtung zum Presspalt abgebogen sein, so daß die Befestigung des Presspolsters gegenüber der Pressplatte ebenfalls in Gegenrichtung zum Presspalt versetzt ist.

Im allgemeinen genügt es, wenn der eine vorstehende Rand des Presspolsters seitlich der Pressplatte fixiert wird, während der gegenüberstehende Rand in der Spannvorrichtung montiert ist. Diese Spannvorrichtung kann in Form einer Klammer ausgebildet sein, die etwa parallel zur Kontaktfläche der dazugehörigen Pressplatte verstellbar an ihr gelagert ist.

Das Presspolster selbst ist vorzugsweise ein gummi-elastisches Band mit einer Dicke in der Größenordnung von 1 mm. Damit es die gewünschte Verspannung aushält, kann es im Inneren ein Gewebe aufweisen, das beidseitig mit Kunststoff beschichtet ist.

In verfahrensmäßiger Hinsicht ist es besonders zweckmäßig, die Trennbleche für den Transport der Folien zu den einzelnen Behandlungsstationen zu verwenden, insbesondere derart, daß Pressbleche eingesetzt werden, die an ihrem Rand gegenüber den Folien an zwei gegenüberliegenden Seiten überstehen und an diesem überstehenden Rand von der Transportvorrichtung erfaßt werden.

Dabei können die Pressbleche von der Transportvorrichtung leicht zusammengedrückt werden, um die passgenaue Lage der einzelnen Folien vor dem Laminieren aufrechtzuerhalten. Oder die Pressbleche werden nur durch sie durchquerende Fixierstifte in ihrer Relativlage zueinander gehalten.

Grundsätzlich kann eine endlose, umlaufende Transportvorrichtung verwendet werden, die alle Behandlungsstationen passiert. Meist ist es aber kostengünstiger, die Transportvorrichtung so auszubilden, daß sie immer nur zwischen zwei benachbarten Behandlungsstationen hin und her fährt.

Damit das Laminat in der Entnahmestation leicht herausgenommen werden kann, insbesondere um seine Adhäsion an den Pressblechen aufzuheben, empfiehlt es sich, die Pressbleche mit samt dem Laminat etwas zu verbiegen im Sinne einer gleichmäßigen Verwölbung. Danach läßt sich zumindest das eine Pressblech leicht vom Laminat abheben.

Weitere Merkmale und Vorteile des Anmeldungsgegenstandes ergeben sich aus der nachfolgenden Beschreibung eines Ausführungsbeispieles anhand der Zeichnung; dabei zeigt
- Figur 1: eine schematische Seitenansicht der Presse mit ihren Presspolstern;
- Figur 2: eine ähnliche Seitenansicht, jedoch mit der Transportvorrichtung, die ein Folienpaket in den Presspalt transportiert hat;
- Figur 3: eine Alternative für die Transportvorrichtung;
- Figur 4: die Draufsicht auf ein Pressblech mit Fixierstiften;
- Figur 5: die gleiche Draufsicht auf ein Pressblech mit alternativ positionierten Fixierstiften und
- Figur 6: das Anlagenschema.

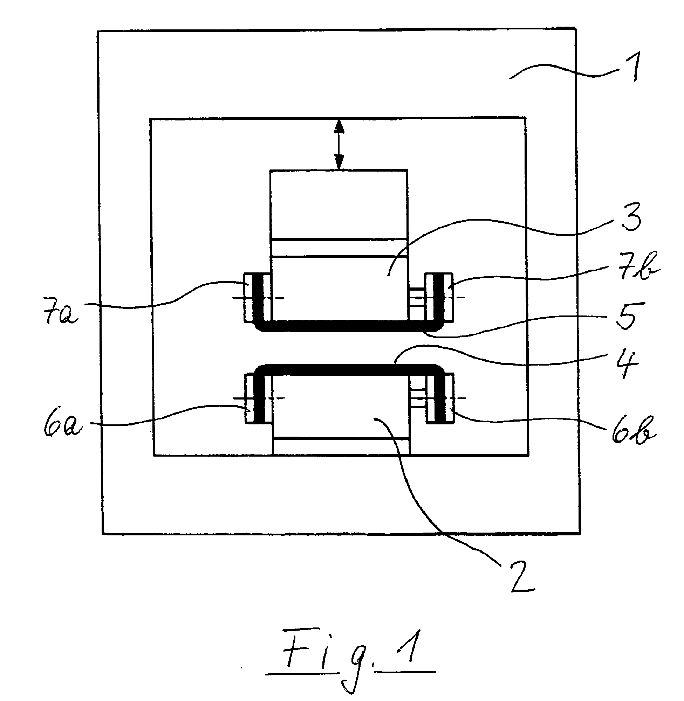

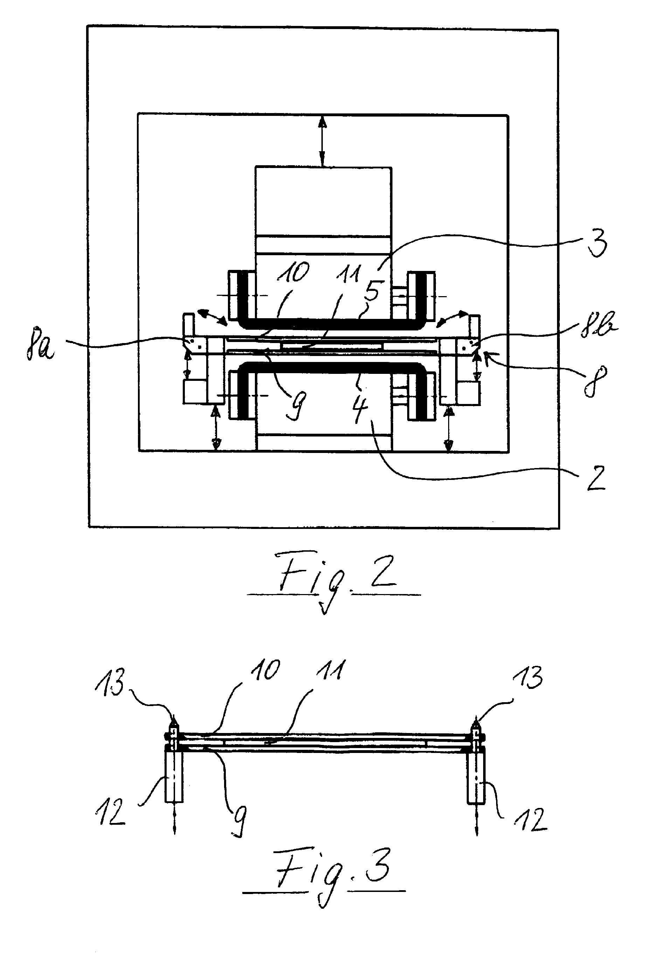

In Figur 1 erkennt man einen Pressenrahmen 1 mit einer festen unteren Pressplatte 2 und einer vertikal verfahrbaren oberen Pressplatte 3. Die beiden Pressplatten 2 und 3 werden jeweils geheizt oder gekühlt, je nach dem, ob es sich um eine Heißpresse oder um eine Kaltpresse handelt.

Wesentlich ist nun, daß an der Oberseite der unteren Pressplatte 2 sowie an der Unterseite der oberen Pressplatte 3 jeweils ein Presspolster 4 bzw. 5 montiert ist. Dieses Presspolster, beispielsweise ein beidseits mit Teflon beschichtetes Kunstfasergewebe, ist jeweils an seinen links und rechts überstehenden Rändern um 90° nach unten bzw. nach oben abgebogen und an Haltebacken 6a und 6b bzw. 7a und 7b fixiert. Dabei sind die Haltebacken 6b und 7b jedoch nicht starr an ihrer Pressplatte festgelegt, sondern können mechanisch, hydraulisch oder auf andere Weise quer zur Hubbewegung der Pressplatten nach außen verspannt werden. Die Haltebacken wirken also wie ein Spannrahmen auf die Presspolster 4 und 5 und halten diese in straffer Anlage an der Oberseite der unteren Pressplatte 2 bzw. an der Unterseite der oberen Pressplatte 3.

Die beiden Presspolster und der Presspalt sind nicht maßstäblich dargestellt. Tatsächlich beträgt die Dicke eines Presspolsters weniger als 1 mm und die des Presspaltes etwa 30 mm.

Figur 2 zeigt den gleichen Sachverhalt, hier jedoch mit der Transportvorrichtung 8. Ihr wesentliches Merkmal sind Klemmvorrichtungen 8a und 8b, die beidseits der Pressplatten angeordnet sind und horizontal durch die Presse hindurchfahren können. Außerdem sind sie aber auch heb- und senkbar.

Im Ausführungsbeispiel haben die Klemmvorrichtungen 8a und 8b einen oberen schwenkbaren Greifer, wodurch die beiden Pressbleche 9 und 10, die unterhalb und oberhalb der zu laminierenden Einzelfolien 11 angeordnet sind, zusammengedrückt werden können. Dadurch sind die Folien 11 während des Transports von den Behandlungsstationen vor der Pressenanlage durch die Pressenanlage hindurch bis zur Entnahmestation gegen Relativverschiebungen gesichert.

Während des Pressvorganges in der Heiß- bzw. Kaltpresse können die Klemmvorrichtungen geöffnet werden, sobald die Folien und Pressbleche durch die in der Presse erzeugte Druckkraft gehalten werden. Dann fährt die Transportvorrichtung mit den Klemmvorrichtungen zurück, um die nächsten Folien mit ihren beiden Pressblechen in die Presse zu transportieren und gleichzeitig die in der Presse laminierten Folien und Pressbleche zur nächsten Presse oder zur nächsten Behandlungsstation zu bringen.

Anstelle einer derartigen im Reversierbetrieb arbeitenden Transportvorrichtung kann aber auch ein Fördersystem im Durchlaufbetrieb verwendet werden. So zeigt beispielsweise Figur 3 einen Schieber- oder Kettentransport 12, der gleichermaßen horizontal durch die Pressen hindurchgeht und heb- und senkbar ist wie die Transportvorrichtung 8. Er trägt jedoch an seiner Oberseite eine Reihe von vertikal nach oben ragenden Fixier- und Mitnehmerstiften 13, die in entsprechende Bohrungen in den überstehenden Rändern der Pressbleche 9 und 10 eingreifen. Dadurch werden die Pressbleche ebenfalls gegen Lageverschiebungen relativ zueinander gesichert und die dazwischen befindlichen Folien 11 werden durch das Gewicht des oberen Pressbleches 10 belastet, wodurch ebenfalls eine gewisse Fixierung gegeben ist.

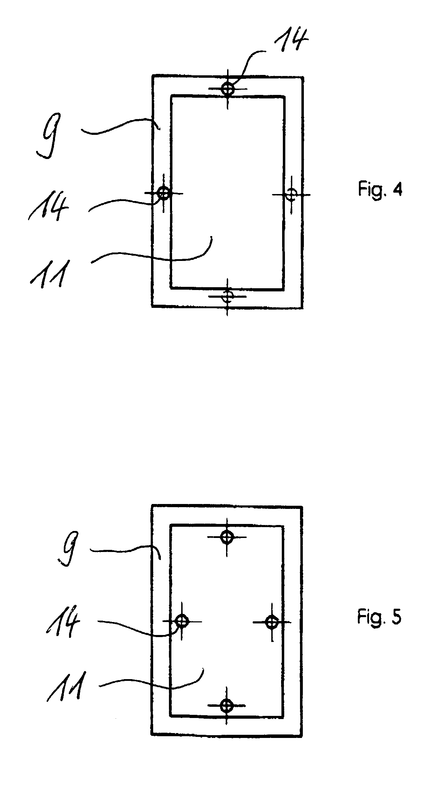

Die Figuren 4 und 5 zeigen eine Draufsicht auf das untere Pressblech 9 mit den aufgelegten Folien 11, die zu einem Laminat verpresst werden sollen. Das obere Pressblech 10 ist aus Übersichtlichkeitsgründen weggelassen.

Damit die beiden Pressbleche mit den Folien passgenau ausgerichtet, zusammengelegt und fixiert werden können, können Fixierstifte 14 verwendet werden. Diese Fixierstifte werden in der Legestation positioniert, in Bohrungen an dem gegenüber den Folien überstehenden Rand der Pressbleche eingesteckt und dienen gleichzeitig als Anschlag für die Positionierung der Folien. Häufig genügen zwei an benachbarten Rändern angeordnete Fixierstifte 14 wie in Figur 4 eingezeichnet. Zusätzlich können aber auch an den verbleibenden Seiten entsprechende Fixierstifte eingesetzt werden, wie in Figur 4 durch strichpunktierte Linien angedeutet. Im letztgenannten Fall sind die Folien dann allseits zwischen den Fixierstiften gesichert.

Während die Folien in Figur 4 nur am Rand gegen Verrutschen gehalten werden, besteht gemäß Figur 5 auch die Möglichkeit, die Fixierstifte 14 innerhalb der Folien-Kontur anzuordnen. In diesem Fall müssen die Folien zwar gelocht sein, erhalten dafür aber eine besonders wirksame Fixierung.

Falls der Transport der Folien und ihrer Pressbleche durch eine Transportvorrichtung gemäß Figur 3 erfolgt, können die Fixierstifte 14 unmittelbar Bestandteil der Transportvorrichtung sein.

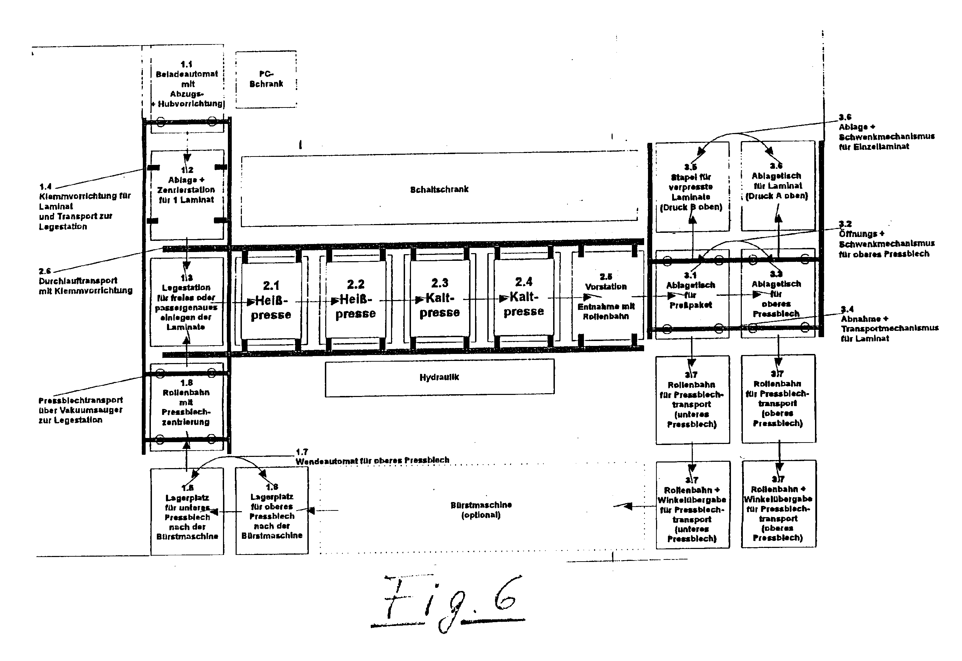

Figur 6 zeigt das Herstellungsverfahren mit den einzelnen Bearbeitungsstationen, wobei sich die nachfolgende Beschreibung auf die wichtigsten Schritte beschränkt:

In der Legestation 1.3 werden soviel Folien, wie zur Herstellung eines einzigen Laminates notwendig sind, zwischen die Pressbleche 9 und 10 gelegt. Es liegt aber im Rahmen der vorliegenden Erfindung, die Folien für zwei Laminate übereinander zu stapeln, indem zwischen die beiden Folienstapel wiederum ein Pressblech gelegt wird. In beiden Fällen können die Folien für ein Laminat bereits zuvor aneinander fixiert sein, etwa durch einzelne Schweißpunkte.

Um ein passgenaues Zusammenlegen der Pressbleche und der Folien zu gewährleisten, sind in der Legestation heb- und senkbare Stifte angeordnet, entsprechend den zuvor beschriebenen Fixierstiften 14.

Zunächst wird das untere Pressblech mit seinen Bohrungen auf die hochgefahrenen Stifte der Legestation gesteckt, danach werden die Folien an oder zwischen die durch das untere Pressblech vorstehenden Stifte gelegt entsprechend der Darstellung in Figur 4 oder die Folien werden mit ihren Bohrungen auf die Stifte gesteckt, entsprechend Figur 5. Sodann wird eventuell ein mittleres Pressblech und ein weiterer Folienstapel aufgelegt oder es wird direkt das obere Pressblech aufgelegt und in gleicher Weise durch Bohrungen an den Stiften fixiert.

Das Einlegen der Pressbleche und Folien kann von Hand oder automatisch erfolgen.

Nach der Zusammenstellung des Presspaketes aus Pressblechen und Folien wird dieses durch die schwenkbaren Klammern 8a und 8b der Transportvorrichtung zusammengedrückt und die vorgenannten Stifte der Legestation werden zur Freigabe des Presspaketes und für den anschließenden Transport zur Pressenanlage abgesenkt.

Statt dessen ist aber auch möglich, eine Transportvorrichtung gemäß Figur 3 einzusetzen, die anstelle der Klammern 8a und 8b eigene Fixierstifte 13 aufweist. Oder man führt die Lagesicherung durch lose Fixierstifte durch, die in den Bohrungen der Pressbleche verklemmt werden, entsprechend Figur 4 und 5.

Das derart zusammengestellte Presspaket gelangt dann in zumindest eine Heißpresse mit einem Pressdruck von mindestens 300 N/cm² und in mindestens eine Kaltpresse mit einem Pressdruck von mindestens 600 N/cm².

Die bisher übliche Mitnahme der Presspolster, ihr Ausrichten auf dem Presspaket etc. erübrigt sich, weil die Presspolster erfindungsgemäß integraler Bestandteil der Pressen sind.

Die Beheizung der Heißpresse erfolgt in an sich bekannter Weise, etwa durch Thermoöl, Heißwasser, Dampf oder elektrisch, wogegen die Kaltpresse an ein Wasser-Kühlgerät angeschlossen ist.

Nach dem Verpressen sind die einzelnen Folien zu einem Laminat verbunden und das Presspaket wird in der Öffnungsstation 3.2, bestehend aus einem Ablagetisch 3.1 für das Presspaket und einem Ablagetisch 3.3 für das obere Pressblech geöffnet. Dies erfolgt zweckmäßig automatisch wie folgt: Zunächst wird das Presspaket verwölbt, um die Adhäsion zwischen den Pressblechen und dem Laminat abzubauen. Danach wird das obere Pressblech durch Greifer bzw. Sauger abgenommen und um 180° geschwenkt. Das unter Pressblech wird dabei gehalten.

Ein Sensor stellt fest, auf welchem der beiden Pressbleche das Laminat liegt. Die Abnahme des Laminats erfolgt dann durch einen Vakuumsauger.

Bei richtiger Lage des Laminats erfolgt die Übergabe direkt zum Stapelplatz 3.5. Sofern das Laminat vom oberen Pressblech mitgenommen wurde, wird es im Ablagetisch 3.3 abgenommen und durch einen Schwenkmechanismus schließlich seitenrichtig dem Stapel 3.5 zugeführt.

Die frei gewordenen Pressbleche werden wieder zurück zur Legestation transportiert.

## Patentansprüche

1. Presse zur Herstellung laminierter Plastikkarten wie Scheckkarten, Kreditkarten und dergleichen aus mehreren miteinander zu verpressenden Folien, bestehend aus zwei relativ zueinander verfahrbaren Pressplatten (2, 3), die beheizbar und/oder kühlbar sind und im Presspalt die zu verpressenden Folien (11) aufnehmen, wobei zwischen den Folien und zumindest einer Pressplatte ein Presspolster (4, 5) und ein Pressblech (9, 10) angeordnet ist,
dadurch gekennzeichnet,
daß das Presspolster (4, 5) starr oder verschiebbar an der Presse gehalten ist.

2. Presse nach Anspruch 1,
dadurch gekennzeichnet,
daß das Presspolster (4, 5) unter Zugspannung verspannbar an der Presse, insbesondere an einer Pressplatte (2, 3) gehalten ist.

3. Presse nach Anspruch 1,
dadurch gekennzeichnet,
daß an jeder Pressplatte (2, 3) ein Presspolster (4, 5) gehalten ist.

4. Presse nach Anspruch 2,
dadurch gekennzeichnet,
daß das Verspannen des Presspolsters (4, 5) mittels einer Spannvorrichtung (6a, 6b/7a, 7b) an der Außenseite der Pressplatte (2, 3) erfolgt.

5. Presse nach Anspruch 1,
dadurch gekennzeichnet,
daß das Presspolster (4, 5) an zumindest zwei gegenüberliegenden Rändern seitlich über die Pressplatte (2, 3) vorsteht und diese vorstehenden Ränder unter Zugspannung fixiert sind.

6. Presse nach Anspruch 5,
dadurch gekennzeichnet,
daß zumindest der eine überstehende Rand des Presspolsters (4, 5) in einer Klammer (6b, 7b) gehalten ist, die etwa parallel zur Kontaktfläche der Pressplatte (2, 3) verstellbar ist.

7. Presse nach Anspruch 5,
dadurch gekennzeichnet,
daß die vorstehenden Ränder des Presspolsters (4, 5) in Gegenrichtung zum Presspalt abgebogen sind.

8. Presse nach Anspruch 1,
dadurch gekennzeichnet,
daß das Presspolster (4, 5) ein gummi-elastisches Band, insbesondere aus beidseitig mit Kunststoff beschichtetem Gewebe ist.

9. Presse nach Anspruch 1,
dadurch gekennzeichnet,
daß das Presspolster (4, 5) eine Dicke von etwa 1 mm, insbesondere etwa 0,5 mm bis etwa 0,7 mm aufweist.

10. Verfahren zur Herstellung laminierter Plastikkarten wie Scheckkarten, Kreditkarten und dergleichen aus mehreren miteinander zu verpressenden Folien (11) mittels mehrerer aufeinander folgender Pressen, die übereinander liegende Folien (11) zu einem Laminat verpressen, wobei zumindest die erste Presse beheizt und zumindest eine der folgenden Pressen gekühlt wird und die Folien (11) zusammen mit ihren Pressblechen (9, 10) von einer Legestation (1.3) zu den Pressen (2.1 bis 2.4) und zu einer Entnahmestation (2.5) transportiert werden, insbesondere unter Verwendung der Presse gemäß einem der Ansprüche 1 bis 9,
dadurch gekennzeichnet,
daß die Pressbleche (9, 10) für den Transport der Folien (11) zu den einzelnen Behandlungsstationen verwendet werden.

11. Verfahren nach Anspruch 10,
dadurch gekennzeichnet,
daß die Pressbleche (9, 10) an ihrem gegenüber den Folien (11) überstehenden Rand von einer Transportvorrichtung (8) erfaßt werden.

12. Verfahren nach Anspruch 10,
dadurch gekennzeichnet,
daß die Pressbleche (9,10) zumindest während des Transportes von einer Transportvorrichtung (8) zusammengedrückt werden.

13. Verfahren nach Anspruch 10,
dadurch gekennzeichnet,
daß die Pressbleche (9, 10) zumindest während des Transportes durch Fixierstifte (13, 14) in ihrer Relativlage zueinandergehalten werden.

14. Verfahren nach Anspruch 13,
dadurch gekennzeichnet,
daß die Fixierstifte (14) auch zur Lagesicherung der Folien (11) dienen.

15. Verfahren nach Anspruch 10,
dadurch gekennzeichnet,
daß zur Entnahme des Laminates letzteres leicht gebogen wird, um die Adhäsion zwischen Laminat und Pressblech aufzuheben.
